# FASCICULE DE BREVET EUROPEEN

(11) **EP 2 958 862 B1**
(45) Date de publication et mention de la délivrance du brevet: **14.08.2024**
(21) Numéro de dépôt: 14713157.7
(22) Date de dépôt: 18.02.2014
(51) Int. Cl.: C03B 7/092, C03B 5/187, C03B 5/173, B01F 27/072, B01F 27/1121, B01F 27/42, B01F 27/50, B01F 27/85, B01F 27/90

(54) **PROCEDE DE FABRICATION D'UN VERRE AVEC MELANGE D'UN FLUX DE VERRE LIQUIDE ET DISPOSITIF**
VERFAHREN ZUR HERSTELLUNG EINER GLASSCHEIBE DURCH MISCHUNG EINES STROMS AUS GESCHMOLZENEM GLAS UND VORRICHTUNG DAFÜR
PROCESS FOR MANUFACTURING A GLASS WITH MIXING OF A MOLTEN GLASS STREAM AND DEVICE

(30) Priorité: 19.02.2013 FR 1351407
(43) Date de publication de la demande: 30.12.2015
(73) Titulaire: SAINT-GOBAIN GLASS FRANCE, 92400 Courbevoie (FR)
(72) Inventeur: FLESSELLES, Jean-Marc, F-94120 Fontenay sous Bois (FR); GOUILLART, Emmanuelle, F-92340 Bourg La Reine (FR); JEFFROY, Marie, F-75013 Paris (FR); PIGEONNEAU, Franck, F-91360 Epinay sur Orge (FR)
(74) Mandataire: Saint-Gobain Recherche
(86) Numéro de dépôt international: PCT/FR2014/050341
(87) Numéro de publication internationale: WO 2014/128402

(56) Documents cités:
- WO-A1-03/089380
- GB-A- 1 229 433
- US-A- 3 236 618
- US-B1- 6 270 248
- ASHOK L. NAYAK: "DEVELOPMENT AND USE OF MECHANICAL STIRRING IN CORNING GLASS WORKS", CERAMIC ENGINEERING AND SCIENCE PROCEEDINGS, 1986, pages 426 - 438, XP002103157
- DATABASE WPI Week 198808, Derwent World Patents Index; AN 1988-052720, XP002715768

## Description

La présente invention porte sur un procédé de fabrication d'un verre et plus particulièrement sur une étape de mélange des constituants d'un flux de verre liquide.

Une telle étape de mélange est en général opérée pour homogénéiser la composition d'un flux de verre liquide sur toute la section de ce flux, avant sa mise en forme.

Un tel mélange peut par exemple être réalisé en sortie de four juste avant que le flux de verre liquide ne soit déversé sur un bain liquide (procédé « float ») pour la production de verre plat.

Un tel mélange peut aussi par exemple être réalisé, juste avant que le flux de verre liquide ne soit divisé en petites portions pour la fabrication de flacons ou de bouteilles.

Il est connu de réaliser de tels mélanges en utilisant des puits ou des cellules de mélange.

Il est proposé dans la demande internationale de brevet N° WO 2004/078664 d'utiliser une cellule de mélange qui peut être un compartiment de forme approximativement carrée ou rectangulaire (vu de dessus) et est équipée d'agitateurs suffisamment performants pour homogénéiser efficacement. La dimension de cette cellule et le nombre d'agitateurs dépendent de la tirée. Sa température de fonctionnement va généralement de 1100°C à 1350°C, notamment autour de 1200°C.

Le US3236618 enseigne un dispositif d'agitation à pales horizontales déplaçant le verre à la fois horizontalement et verticalement.

Le GB1229433 enseigne un dispositif de mélange de verre fondu avec du sable par deux agitateurs dont les axes sont alignés dans le sens du flux de matière. En conséquence de cette configuration, d'importantes zones non-agitées existent de part et d'autre de l'agitateur, sauf à rapprocher très fortement les parois pour forcer le mélange à passer dans la zone agitée.

Il est connu d'utiliser un mélangeur qui fait circuler le verre à travers un puits où sont disposées des pales d'agitation entraînées en rotation sur elles-mêmes et qui est placé entre le canal de sortie du four amont et la lèvre de coulée déversant le flux aval de verre liquide. Cette solution donne de très bons résultats mais elle est très coûteuse à fabriquer et à entretenir, très complexe à mettre en oeuvre et à utiliser.

Dans les systèmes d'alimentation (« feeders » en anglais) et les canaux les agitateurs peuvent notamment être verticaux et comporter plusieurs niveaux de pales inclinées, en sens inverses d'un agitateur à l'autre pour réaliser un mélange à la fois vertical et horizontal. Ces agitateurs sont entraînés en rotation sur eux-mêmes et peuvent par exemple être réalisés en platine rhodié, en alliage métallique réfractaire ou en céramique structurale (alumine, zircone mullite, mullite, etc.).

Les agitateurs actuellement utilisés industriellement dans les canaux ou feeders de production du verre n'effectuent qu'un mélange partiel, qui n'est souvent pas suffisant pour faire disparaître certains défauts chimiques dans le verre dans le flux en aval de l'agitation. Ce problème est très important pour les verres dits « électroniques » utilisés dans l'industrie de l'électronique, notamment pour les écrans de visualisation, ou encore pour les panneaux photovoltaïques.

La présente invention entend remédier aux inconvénients de l'art antérieur en proposant un procédé et un dispositif qui permettent de mélanger un flux de verre liquide d'une manière simple, très efficace et peu onéreuse à mettre en oeuvre, notamment pour une mise en oeuvre dans les systèmes d'alimentation et les canaux.

L'invention a ainsi pour objet, dans son acception la plus large, un procédé de fabrication d'un verre comprenant la réalisation d'un flux de verre liquide s'écoulant selon un axe central et le mélange de ce flux, ledit mélange étant réalisé en entraînant en rotation n arbres, n nombre entier égal ou supérieur à deux, présentant chacun un axe positionné avec un angle compris entre 0° et 30° par rapport à une verticale à la direction de l'axe central dudit flux, deux arbres adjacents étant séparés d'une distance D avec leurs axes parallèles et avec chacun de ces deux arbres adjacents qui est relié à au moins une tige qui est située au moins en partie dans ledit flux et chacune de ces tiges présentant un axe parallèle à l'axe de l'arbre auquel elle est reliée.

Par ailleurs, pour deux arbres adjacents au moins, la distance entre au moins une tige et l'arbre auquel elle est relié est supérieure ou égale à 9/20 de la distance entre ces deux arbres, et lesdits deux arbres adjacents sont entraînés en contre-rotation l'un par rapport à l'autre avec, en suivant le sens du flux et en considérant, vu de dessus, qu'un de ces deux arbres adjacents est à gauche et que l'autre est à droite, l'arbre de gauche est entraîné dans le sens antihoraire et l'arbre de droite est entraîné dans le sens horaire. Par ailleurs, le mélange du flux est réalisé dans des plans horizontaux, le taux d'étirement moyen dans le plan horizontal étant au moins 10 fois supérieur au taux moyen d'étirement vertical.

Ainsi, par le sens de rotation contraire choisi, la rotation des tiges a pour effet d'augmenter la vitesse du flux dans une zone de recouvrement située entre ces deux arbres.

Pour deux arbres adjacents au moins, la distance entre au moins une tige et l'arbre auquel elle est reliée est, de préférence, supérieure ou égale à la moitié de la distance entre les axes de ces deux arbres, voire est supérieure à la moitié de la distance entre les axes de ces deux arbres afin d'améliorer l'efficacité du mélange.

Le principe de l'invention repose ainsi sur l'utilisation de plusieurs tiges qui étirent suffisamment le fluide de telle sorte que les inhomogénéités résiduelles soient atténuées par la diffusion moléculaire. Les mélangeurs dits « chaotiques » réalisent efficacement ce processus, et même, en un certain sens, de façon optimale. Le lien avec la théorie du chaos réside dans l'entrecroisement entre les trajectoires des particules fluides conduisant à un étirement exponentiel en fonction du temps. Cette théorie fournit des éléments pour quantifier l'efficacité et la qualité du mélange.

Pour que des tiges plongeant dans le verre liquide réalisent un mélange chaotique, il est en particulier, nécessaire que les trajectoires des tiges s'entrecroisent, afin que les filaments de fluide puissent être successivement étirés par les différentes tiges mais également repliés. Ceci est essentiel pour obtenir l'effet multiplicatif qui rend ainsi le mélange bien plus efficace.

Pour que les tiges attrapent et étirent tous les éléments de fluide, et donc in fine homogénéisent correctement le fluide, la vitesse de rotation doit être adaptée au débit : plus le débit du flux de verre liquide est élevé, plus la vitesse de rotation des tiges doit être élevée.

Dans une première variante de réalisation du procédé selon l'invention, pour lesdits deux arbres adjacents, un de ces arbres est relié à au moins une tige qui est située au moins en partie dans ledit flux et l'autre arbre est relié à au moins deux tiges qui sont situées chacune au moins en partie dans ledit flux.

Dans une sous-variante de cette première variante, pour lesdits deux arbres adjacents, un de ces arbres est relié à au moins deux tiges qui sont situées au moins en partie dans ledit flux et l'autre arbre est relié à au moins deux tiges qui sont situées chacune au moins en partie dans ledit flux.

Dans une seconde variante de réalisation du procédé selon l'invention, indépendante de la première, quatre arbres adjacents sont entraînés en rotation et chacun de ces arbres est relié à une seule tige, deux arbres adjacents étant entrainés en contre-rotation l'un par rapport à l'autre avec, en suivant le sens du flux et en considérant, vu de dessus, qu'un de ces deux arbres adjacents est à gauche et que l'autre est à droite, l'arbre de gauche est entraîné dans le sens antihoraire et l'arbre de droite est entraîné dans le sens horaire.

En particulier, il est préférable que lesdits deux arbres adjacents entrainés en contre-rotation l'un par rapport à l'autre soient entrainés en rotation à la même vitesse pendant le mélange avec un déphasage initial qui est
- soit de 0° avec deux arbres comportant chacun une seule tige,
- soit de 180°/x par rapport à l'arbre adjacent, x étant le nombre (nombre entier) de tiges de l'arbre auquel est relié le plus grand nombre de tiges parmi les deux arbres adjacents considérés et x ≥ 2.

Bien sûr, les rotations des tiges (trajectoire et sens) sont de telle sorte qu'il n'y ait jamais aucun choc entre deux tiges lors de la mise en oeuvre de l'invention car un tel choc, répété, engendrerait une usure prématurée des tiges concernées.

De préférence, les axes desdits deux arbres adjacents entrainés en contre-rotation l'un par rapport à l'autre sont situés dans un plan qui est perpendiculaire à la direction de l'axe central du flux.

De préférence en outre, lesdits deux arbres adjacents entrainés en contre-rotation l'un par rapport à l'autre sont disposés à égale distance, de l'axe longitudinal central du flux afin d'améliorer encore le mélange et en particulier l'homogénéité transversalement audit flux.

De préférence en outre, pour optimiser l'efficacité du mélange, la vitesse de rotation des arbres est comprise entre 1 et 20 tours par minute en incluant ces valeurs pour une vitesse de flux en amont du mélange comprise entre 0,1 et 5,0 mm/s en incluant ces valeurs.

Le flux présente un nombre d'étirement nb au moins égal à 20 et en particulier supérieur ou égal à 35 (et notamment inférieur ou égal à 1000), ce nombre d'étirement nb étant = L / (UT), avec :
- L qui est longueur selon l'axe du flux le long de laquelle le mélange est effectué, en mm,
- U qui est la vitesse moyenne du fluide le long de cette longueur, en mm/s, et
- T qui est la période de rotation desdits arbres entrainés en contre-rotation l'un par rapport à l'autre et qui vaut 60 / V où V est la vitesse de rotation desdits arbres en tours / minute.

Dans une variante, la distance entre les tiges et l'arbre auquel sont reliées ces tiges est identique pendant le mélange afin de conserver une simplicité opérationnelle.

Dans une autre variante, au moins un arbre et de préférence tous les arbres, plonge(nt) dans ledit flux, cet arbre ou ces arbres qui plonge(nt) dans ledit flux présente(nt) de préférence dans leur partie qui plonge dans ledit flux une forme asymétrique par rapport à l'axe de l'arbre, et de préférence encore au moins une vis ou au moins une pâle qui tourne dans ledit flux pour diminuer l'effet de « zone morte », avec un faible mélange, à l'aplomb des arbres.

La présente invention porte également sur un dispositif de fabrication d'un verre, notamment pour la mise en oeuvre du procédé selon l'invention, comprenant un four générant un flux de verre liquide et un agitateur pour mélanger ce flux, ce dispositif comportant n arbres entraînés en rotation, n nombre entier égal ou supérieur à deux, présentant chacun un axe positionné avec un angle compris entre 0° et 30° par rapport à une verticale à la direction de l'axe central dudit flux, deux arbres adjacents étant séparés d'une distance D avec leurs axes parallèles et avec chacun de ces deux arbres adjacents qui est relié à au moins une tige qui est située au moins en partie dans ledit flux et chacune de ces tiges présentant un axe parallèle à l'axe de l'arbre auquel elle est reliée, pour lesdits deux arbres adjacents au moins, la distance entre l'axe d'une tige et l'arbre auquel elle est reliée étant supérieure ou égale à 9/20 de la distance entre ces deux arbres, et lesdits deux arbres adjacents étant entraînés en contre-rotation l'un par rapport à l'autre avec, en suivant le sens du flux et en considérant, vu de dessus, qu'un de ces deux arbres adjacents est à gauche et que l'autre est à droite, l'arbre de gauche est entraîné dans le sens antihoraire et l'arbre de droite est entraîné dans le sens horaire, le mélange du flux étant réalisé dans des plans horizontaux, le taux d'étirement moyen dans le plan horizontal étant au moins 10 fois supérieur au taux moyen d'étirement vertical.

Dans une première variante de réalisation du dispositif selon l'invention, pour lesdits deux arbres adjacents, un de ces arbre est relié à au moins une tige qui est située au moins en partie dans ledit flux et l'autre arbre est relié à au moins deux tiges qui sont situées chacune au moins en partie dans ledit flux.

Dans une sous-variante de cette première variante, pour lesdits deux arbres adjacents, un de ces arbres est relié à au moins deux tiges qui sont situées au moins en partie dans ledit flux et l'autre arbre est relié à au moins deux tiges qui sont situées chacune au moins en partie dans ledit flux.

Dans une seconde variante de réalisation du dispositif selon l'invention, indépendante de la première, quatre arbres adjacents sont entraînés en rotation et chacun de ces arbres est relié à une seule tige, deux arbres adjacents étant entrainés en contre-rotation l'un par rapport à l'autre avec, en suivant le sens du flux et en considérant, vu de dessus, qu'un de ces deux arbres adjacents est à gauche et que l'autre est à droite, l'arbre de gauche est entraîné dans le sens antihoraire et l'arbre de droite est entraîné dans le sens horaire.

De préférence aussi pour ce dispositif, pour lesdits deux arbres adjacents au moins, la distance entre l'axe d'une tige et l'arbre auquel elle est reliée est supérieure ou égale à la moitié de la distance entre les axes de ces deux arbres, voire est supérieure à la moitié de la distance entre les axes de ces deux arbres.

De préférence en outre, deux arbres adjacents entraînés en contre-rotation l'un par rapport à l'autre sont disposés à égale distance, de l'axe longitudinal central du flux afin d'améliorer encore le mélange.

Dans une variante spécifique, au moins une tige, et de préférence chaque tige, présente une surface lisse, sans moyen mécanique supplémentaire de mélange. Ceci signifie que la tige ne présente pas un profil particulier du type vis ou avec des pâles horizontales. La tige a donc la forme d'un cylindre dont la section transversale est constante, ladite section étant de préférence du type circulaire mais pas nécessairement circulaire. D'une manière surprenante, il a été constaté qu'il était possible de prévoir des moyens mécaniques supplémentaires de mélange à la surface des tiges plongeant dans le flux, mais que cela améliore peu le très bon mélange déjà obtenu avec des tiges à surface lisse ; or, de telles tiges lisses sont plus faciles à fabriquer et sont moins onéreuses ; elles sont en outre moins fragiles et leur usure est plus uniforme, donc plus facile à maîtriser.

Dans une variante toute spécifique, au moins une tige, et de préférence chaque tige, présente une section circulaire qui est de préférence identique tout le long de la tige, avec un diamètre de préférence compris entre 20 et 150 mm, voire compris entre 40 et 100 mm.

Les tiges peuvent par exemple être réalisées en platine rhodié, en alliage métallique réfractaire ou en céramique structurale (alumine, zircone mullite, mullite, etc.).

Le mélangeur selon l'invention présente des performances bien meilleures que les agitateurs de l'art antérieur et ces performances sont très peu sensibles aux conditions d'utilisation. En effet, des tiges qui se déplacent conformément à l'invention permettent « d'entraîner » un plus grand volume de fluide et d'étirer plus que des vis ou des pales dont le rayon d'action est bien plus faible et laissent donc passer une plus grande quantité de fluide mal mélangé. Le mélange selon l'invention est ainsi beaucoup plus homogène pour l'ensemble du fluide.

Le dispositif selon l'invention permet le cas échéant de mélanger uniquement au sein de plans horizontaux qui ne se mélangent pas entre eux (si on veut éviter par exemple de contaminer le verre par du verre proche de la sole plus riche en réfractaire). Il s'agit là d'un mélange bidimensionnel particulièrement peu gourmand en énergie. Le verre est ainsi déplacé essentiellement horizontalement et sans composante verticale par l'agitation selon l'invention. Ce type d'agitation exonère l'agitateur de toute portance verticale. L'agitateur est donc peu sollicité sur un plan mécanique et peut de ce fait être réalisé en un matériau relativement moins résistant que d'autres mais plus réfractaire, comme un matériau céramique. Ce brassage bidimensionnel du verre est procuré par les tiges verticales, notamment du type cylindrique. L'existence d'au moins un barreau horizontal reliant différentes tiges actionnées par le même arbre n'est pas exclue. Ce barreau sert essentiellement à renforcer la solidité de l'agitateur et n'exerce de préférence aucune portance verticale et peut donc être également essentiellement cylindrique. Il s'agit donc d'un dispositif performant, peu coûteux, robuste et flexible. Un tel dispositif est extrêmement performant lorsqu'il s'agit d'homogénéiser un verre avant formage en verre plat. En effet, un mélange bidimensionnel formant des strates horizontales est largement suffisant pour du verre plat puisque les éventuelles différentes strates de composition se retrouvent parallèles au vitrage formé et ne sont à l'origine d'aucune distorsion optique.

L'imposition d'une composante tridimensionnelle à l'écoulement serait obtenu en disposant à la surface des tiges par exemple des pales inclinées, ce qui réaliserait alors un mélange dans les trois dimensions de l'espace. Cependant, un tel mode de réalisation est beaucoup plus énergivore, sollicite beaucoup plus les matériaux et ne paraît généralement pas nécessaire. Néanmoins on autorise selon l'invention une certaine composante de mélange verticale. La proportion de mélange horizontale et de mélange vertical peut se déterminer la comparaison des taux d'étirement moyen entre la sortie et l'entrée du dispositif selon l'invention. Pour mesurer ces taux d'étirement moyens, on procède par simulation numérique de façon connue de l'homme du métier. Le taux d'étirement correspond à la distance de deux particules fluides (« fluid particles » en anglais) en sortie de dispositif rapportée à leur distance initiale infiniment proche à l'entrée du dispositif Cette composante minoritaire verticale de mélange peut être apportée par des éléments traditionnellement mis en œuvre pour le mélange des fluides visqueux, comme des pales ou des corrugations en vis, etc.

Selon l'invention, le mélange du flux est réalisé dans des plans horizontaux, le taux d'étirement moyen dans le plan horizontal étant au moins 10 fois et de préférence au moins 30 fois et de manière encore préférée au moins 50 fois supérieur au taux moyen d'étirement vertical.

En l'absence de composante verticale de mélange, le mélange du flux est réalisé uniquement au sein de plans horizontaux qui ne se mélangent pas entre eux.

Enfin, lorsque la couleur du verre est obtenue par « coloration en feeder » (dans l'industrie du flaconnage par exemple), les mélangeurs selon l'invention permettent d'obtenir une bien meilleure homogénéité de couleur que les agitateurs à vis actuellement utilisés.

La présente invention sera mieux comprise à la lecture de la description détaillée ci-après d'exemples de réalisation non limitatifs et des figures ci-jointes :
- La figure 1 illustre une vue en coupe horizontale, vue de dessus, d'un exemple de réalisation d'un agitateur selon une première variante de l'invention à deux arbres et quatre tiges, ainsi que les trajectoires des tiges ;
- La figure 2 illustre une vue en perspective d'un exemple de réalisation d'un agitateur selon la figure 1 ;
- La figure 3 illustre un striogramme sans agitation ;
- La figure 4 illustre un striogramme de l'agitation réalisée à l'aide d'un agitateur selon la figure 1 ;
- La figure 5 illustre une simulation des effets d'une agitation réalisée à l'aide d'un agitateur selon la figure 1 ;
- Les figures 6 et 7 illustrent une simulation comparée, vue de dessus, de deux agitateurs dans les mêmes conditions, respectivement pour un agitateur à quatre vis alignées verticalement et pour un agitateur selon les figures 1 et 2 ; et
- La figure 8 illustre une vue en coupe horizontale, vue de dessus, d'un exemple de réalisation d'un agitateur selon une seconde variante de l'invention à quatre arbres et quatre tiges, ainsi que les trajectoires des tiges.

Pour toutes ces figures, les proportions entre les différents éléments sont respectées, afin de faciliter la lecture.

La présente invention se rapporte à un procédé et un dispositif de fabrication d'un verre, et plus précisément au mélange des différents constituants du verre à l'état liquide.

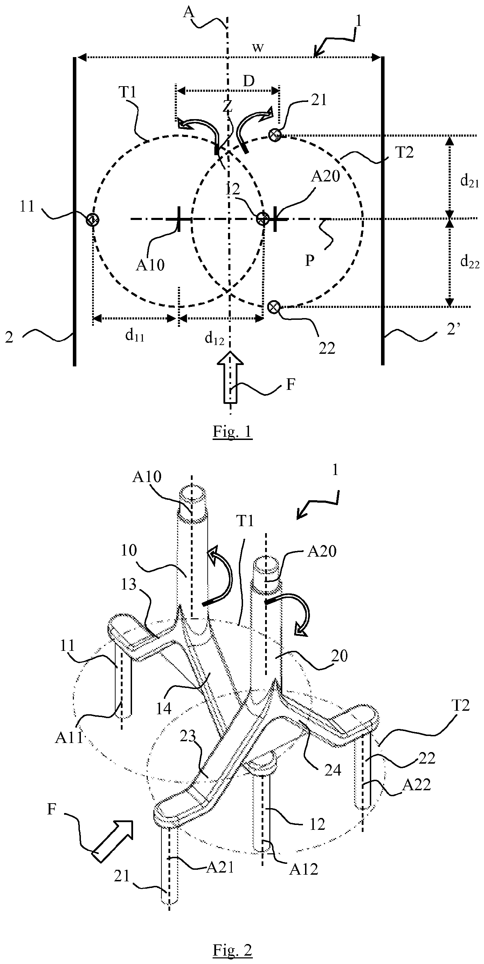

Un tel procédé et un tel dispositif utilisent un four qui génère un flux de verre liquide qui est sensiblement horizontal dans la pratique et qui est illustré par la grosse flèche F en bas de la figure 1.

Pour être mélangé, ce flux traverse un agitateur 1 de bas en haut sur la figure 1 ; en pratique, comme le flux est horizontal, il traverse l'agitateur de gauche à droite ou de droite à gauche. Cet agitateur est illustré en perspective en figure 2.

Selon l'invention, il est prévu que des tiges 11, 12, 21, 22, ici au nombre de quatre, plongent verticalement dans le flux pour le mélanger.

Les tiges 11, 12 ; 21, 22 sont reliées respectivement deux par deux à un arbre 10, 20 (non illustré en figure 1), ici donc au nombre de deux. Ces deux arbres sont séparés d'une distance égale à D mesurée perpendiculairement au flux. Chaque arbre est entraîné en rotation ; seuls les axes verticaux A10 et A20 de ces deux arbres sont visibles en figure 1. Ces arbres 10, 20, adjacents, sont disposés à égale distance, D/2, de l'axe longitudinal central du flux F.

Les axes verticaux A11, A12, A21, A22, respectivement des tiges 11, 12, 21, 22 sont déportés par rapport aux axes A10, A20 : les axes A11, A12 sont situés respectivement à une distance d₁₁, d₁₂ de l'axe A10 et les axes A21, A22 sont situés respectivement à une distance d₂₁, d₂₂ de l'axe A20.

Ces distances sont identiques : des bras 13, 14 ; 23, 24 relient respectivement les tiges 11, 12 ; 21, 22 aux arbres 10 ; 20.

Ici, les arbres et les bras ne sont pas dans le flux F ; seules les tiges sont dans le flux F.

Comme visible en figure 1 pour les deux arbres, la distance d₁₁, d₁₂ ; d₂₁, d₂₂ entre au moins une tige et l'arbre auquel elle est reliée est supérieure ou égale à 9/20 de la distance D entre ces deux arbres. Cette distance peut être supérieure ou égale à la moitié de la distance D entre les axes de ces deux arbres, voire être supérieure à la moitié de la distance D entre les axes de ces deux arbres.

T1 et T2 illustrent les trajectoires des axes des tiges respectivement de l'arbre 10 et 20.

Comme visible aussi en figure 1 les deux arbres 10, 20, adjacents, sont entrainés en contre-rotation l'un par rapport à l'autre. Vu de dessus, en suivant le sens du flux et en considérant, qu'un de ces deux arbres adjacents est à gauche et que l'autre est à droite, l'arbre de gauche est entraîné dans le sens antihoraire et l'arbre de droite est entraîné dans le sens horaire. Ces deux arbres sont entrainés en contre-rotation l'un par rapport à l'autre pour augmenter la vitesse du flux dans une zone Z de recouvrement des trajectoires qui est située entre ces deux arbres. Ces deux arbres adjacents 10, 20 sont disposés ici symétriquement par rapport à l'axe central A dudit flux F, à égale distance de cet axe.

La figure 1 illustre qu'en suivant le sens du flux (ici du bas vers le haut de la feuille) et qu'en considérant que ce flux est vu de dessus, un arbre, l'arbre 10, est situé à gauche et que l'autre arbre, l'arbre 20 est situé à droite, alors l'arbre 10 de gauche est entraîné en rotation dans le sens antihoraire par rapport à son axe A10 et l'arbre 20 de droite est entraîné dans le sens horaire (sens des aiguilles d'une montre) par rapport à son axe A20.

Dans la configuration illustrée aux figures 1 et 2, les deux arbres sont tous les deux situés sur une droite P perpendiculaire à la direction du flux F à mélanger et sont tous entrainés en rotation à la même vitesse pendant le mélange avec un déphasage initial de 180°/2 (soit 90°) l'un par rapport à l'autre.

Il est possible de généraliser cette disposition en prévoyant que les n arbres soient tous entrainés en rotation à la même vitesse pendant le mélange avec un déphasage initial pendant le mélange qui est
- soit de 0° avec deux arbres comportant chacun une seule tige,
- soit de 180°/x par rapport à l'arbre adjacent, x étant le nombre de tiges pour l'arbre auquel est relié le plus grand nombre de tiges.

En outre, dans cette configuration illustrée, chaque tige présente une section circulaire qui est identique tout le long de la tige, avec un diamètre de préférence compris entre 20 et 150 mm, voire compris entre 40 et 100 mm.

A titre d'exemple, un agitateur 1 a été réalisé avec :
- la distance d₁₁, d₁₂ ; d₂₁, d₂₂ entre l'axe A11, A12, A21, A22 de chaque tige, respectivement 11, 12, 21, 22 et l'axe A10, A20 de l'arbre 10, 20 auquel elle est relié de 310 mm
- la distance D entre les axes des deux arbres 10, 20, de 350 mm
- le diamètre de chaque tiges 11, 12, 21, 22 de 40 mm sur toute la hauteur de la tige située dans le flux F
- une hauteur de flux F de 300 mm
- une largeur w de flux F entres les parois gauche 2 et droite 2' de l'agitateur de 1100 mm.

On constate ainsi que pour ces deux arbres adjacents, la distance d₁₁, d₁₂ ; d₂₁, d₂₂ entre chaque tige et l'arbre auquel elle est reliée est supérieure à la distance D entre ces deux arbres. Le rapport entre ces distance d₁₁, d₁₂ ; d₂₁, d₂₂ et la distance D, d/D = 310 / 350 = 0,88 (avec d = d₁₁, d₁₂, d₂₁, ou d₂₂).

Il est recommandé que le rapport d / D soit supérieur à ¾ afin d'obtenir une zone de recouvrement Z des deux trajectoires T1, T2 qui soit suffisante pour atteindre l'efficacité souhaitée.

Les tiges ne doivent pas être en contact avec la sole ; une distance minimale de 20 à 60 mm entre le bas de chaque tige et la sole doit être prévue.

Dans cet exemple, par application de la formule nb = L / (UT), comme
- L la longueur selon l'axe du flux le long de laquelle le mélange est effectué, est égale à la distance entre deux tiges (d₁₁ + d₁₂ = 620 mm) augmentée de la somme de la moitié du diamètre des deux tiges (40/2 + 40/2), L = 660 mm
- U, la vitesse moyenne du fluide le long de cette longueur, est de 2 mm/s, et
- T la période de rotation desdits arbres (10, 20) entrainés en contre-rotation l'un par rapport à l'autre vaut 60 / V où V la vitesse de rotation desdits arbres est de 8 tours / minute,
alors, le flux présente un nombre d'étirement nb = 660 / (2 x (60 / 8)) = 44.

Ce nombre d'étirement est bien supérieur à 20 et même est supérieur à 35.

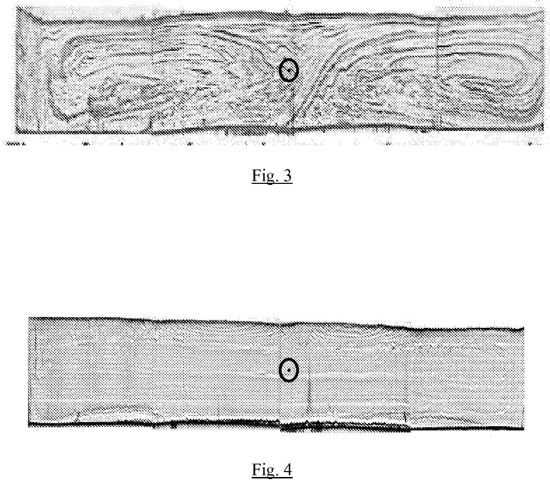

Les figures 3 et 4 illustrent chacun un striogramme numérique.

Le principe du striographe repose sur l'observation en transmission de la déviation d'un faisceau lumineux collimaté (faisceau de lumière parallèle) lors du passage à travers un échantillon de verre : il s'agit d'un procédé « ombroscopique ». En effet, les variations locales de l'indice de réfraction se comportent comme des lentilles élémentaires qui vont faire converger ou diverger le faisceau de lumière (les rayons lumineux s'incurvent dans le sens des gradients d'indice), ce qui induit des inhomogénéités d'éclairement en sortie de l'échantillon. On visualise l'image obtenue en transmission sur une caméra CCD. L'image obtenue est appelée striogramme. Les zones où l'indice de réfraction est localement plus faible que le milieu environnant se comporteront comme des lentilles divergentes (zones sombres de la stratification sur le striogramme) et les zones de plus fort indice local se comporteront comme des lentilles convergentes (zones claires de la stratification sur le striogramme).

Le sens d'écoulement du verre liquide est indiqué par le point entouré d'un cercle. La face supérieure du flux par rapport à la verticale est la face située en haut de chaque figure.

La figure 3 illustre un striogramme obtenu sans aucune agitation, lorsqu'il n'y a aucune étape de mélange du flux de verre et aucun dispositif de mélange en travers du flux. Les stries sont larges, nombreuses et orientées dans des directions très variées.

La figure 4 illustre le striogramme obtenu lors de la mise en oeuvre de la solution des figures 1 et 2 avec les paramètres indiqués précédemment. Les stries sont fines, peu nombreuses et orientées pour l'essentiel parallèlement à la face supérieure du flux, ce qui limite leur effet néfaste. Sur cette figure 4, l'homogénéité du verre est très bonne, presque parfaite.

Les trajectoires de 48 000 particules fluides sans masse ont été calculées à l'aide d'un algorithme de traçage.

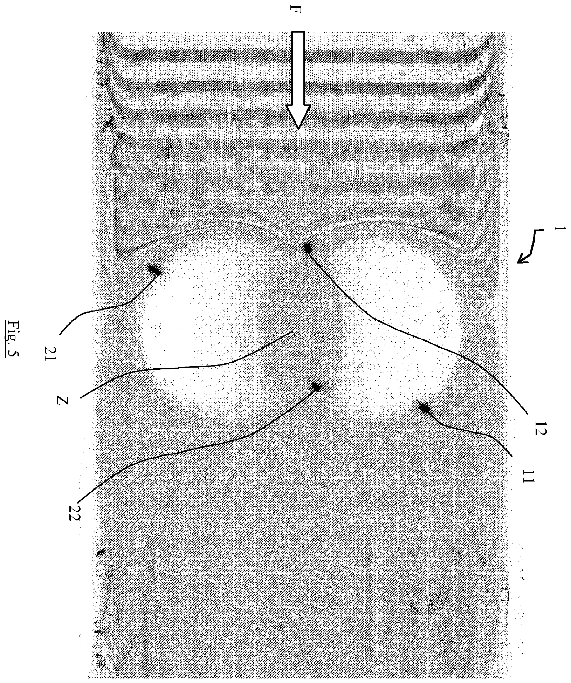

La figure 5 illustre une simulation numérique des effets de l'agitateur présenté ci-avant sur le flux F pour une vitesse de rotation des arbres 10, 20 (non visibles en figure 5) de 8 tours par minute. Plus précisément, la figure 5 superpose la position des particules fluides entre leur position au début d'une période de rotation de l'agitateur et position à la fin d'une période de rotation de l'agitateur (soit un tour complet de rotation des deux arbres ; toutes les périodes ne sont pas représentées).

Les stries noires en amont de l'agitateur 1 illustrent l'arrivé d'un flux inhomogène en amont de l'agitateur.

Chacun peut constater qu'en aval de l'agitateur 1, il n'y a plus aucune strie ; le flux de verre est complètement mélangé grâce à la zone Z de recouvrement des trajectoires des tiges.

Il a été constaté que, dans la plage entre 1 et 20 tours par minute, augmenter sensiblement la vitesse de rotation peut parfois permettre d'augmenter la qualité du mélange.

Il a été constaté que, dans la plage de diamètre des tiges de 20 et 150 mm, augmenter le diamètre peut parfois permettre d'augmenter la qualité du mélange. De meilleurs résultats ont été obtenus avec des tiges présentant toutes un diamètre compris entre 40 et 100 mm.

Il a été constaté que le mélange est homogène dans tous les plans horizontaux du flux lorsque, au moins une tige 11, 12 ; 21, 22, et de préférence chaque tige, présente une surface lisse, comme visible en figure 2, sans moyen mécanique supplémentaire de mélange à sa surface.

Le coût du mélangeur illustré aux figures 1 et 2 est plus faible que celui des agitateurs utilisés dans l'art antérieur et ce mélangeur est relativement facile à installer, ne nécessitant que deux axes de rotation (et donc uniquement deux trous dans la voûte).

Avec cette configuration, il est possible de mélanger un flux de verre liquide d'une manière simple, très efficace et peu onéreuse à mettre en oeuvre.

Le mouvement de rotation/contre-rotation des tiges a pour effet de ramener les éléments du flux vers le centre du flux dans la partie en amont du plan P et a pour effet de repousser les éléments du flux vers les parois latérales dans la partie en aval du plan P : ce double effet est essentiel pour permettre l'homogénéisation selon la largeur du fluide.

Toutefois, en fonction de la quantité des éléments ajoutés dans le flux en amont du mélangeur, pour obtenir un mélange homogène en aval du mélangeur, il peut être nécessaire de prévoir des moyens mécaniques supplémentaires, comme par exemple des pâles.

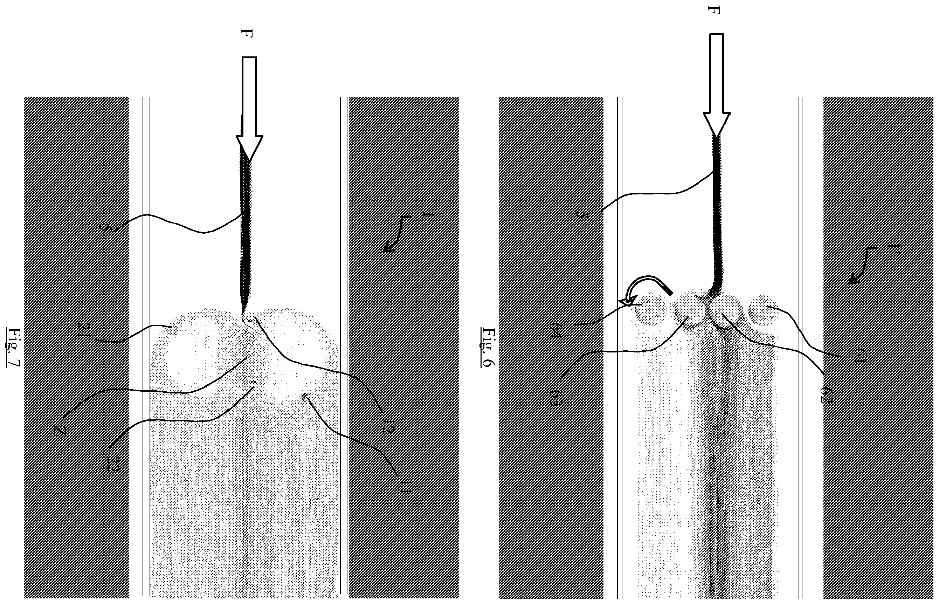

Les figures 6 et 7 illustrent chacune une simulation de l'effet sur un filet de matière 5 introduit au centre d'un flux F, en amont respectivement :
- d'un agitateur l' comportant quatre vis 61, 62, 63, 64 verticales, pas à gauche, alignées dans un plan perpendiculaire à un flux F horizontal et entraînées en rotation dans le même sens, en figure 6 le sens antihoraire vu de dessus,
- d'un agitateur 1 des figures 1 et 2 avec les paramètres indiqués précédemment pour un flux F horizontal.

La figure 7 montre une meilleure répartition du filet de matière en aval de l'agitateur 1 de la figure 5 qu'en aval de l'agitateur 1' de la figure 6.

Dans la configuration illustrée aux figures 1 et 2, l'agitateur comporte ainsi n = 2 arbres présentant chacun un axe positionné verticalement, avec x = 2 tiges présentant chacune un axe positionné verticalement qui sont reliées à chaque arbre et qui plongent chacune dans le flux F qui s'écoule selon un axe central A horizontal. Les axes des arbres sont donc positionnés avec un angle de 90° par rapport à la direction de l'axe central A.

Tous les arbres sont positionnés avec leurs axes parallèles entre eux.

Toutefois, il est possible que la direction de l'axe central A ne soit pas horizontal mais soit inclinée par rapport à l'horizontal, notamment pour favoriser l'écoulement du flux. Dans ce cas, les axes des arbres peuvent être perpendiculaires à l'axe central, ou être verticaux, ou être incliné d'un angle compris entre 60° et moins de 90° par rapport à la direction de l'axe central A.

Que la direction de l'axe central A soit horizontale ou non, il est possible que les arbres soient positionnés de telle sorte qu'ils présentent chacun un axe positionné avec un angle compris entre 60° et moins de 90° par rapport à la direction de l'axe central A dudit flux F, c'est-à-dire que les arbres présentent chacun un axe positionné avec un angle compris entre 0° et 30° par rapport à une verticale à la direction de l'axe central A dudit flux F afin d'ajouter une composante supplémentaire dans le mélange et augmenter encore les possibilités d'homogénéisation. La « verticale » considérée ici est une verticale relative ; elle est considérée par rapport à la direction de l'axe central A dudit flux F. En d'autres termes, elle est perpendiculaire à la direction de l'axe central A du flux F et comprise dans le plan vertical comprenant la direction de l'axe central A du flux F.

En fonction de la largeur de flux F, il est possible de prévoir n = 3 arbres, voire n = 4 arbres, voire plus encore, avec toujours :
- un arbre lié à au moins une tige plongeant dans le flux F
- un arbre lié à au moins deux tiges plongeant dans le flux F, et
- chaque tige présentant un axe parallèle à l'axe de l'arbre auquel elle est liée.

Un nombre paire d'arbres est préféré ; toutefois, un nombre impair d'arbre peut être préconisé notamment lorsque le flux en amont du mélangeur présente une dysmétrie par rapport à l'axe central A.

Dans le cas où trois arbres (n = 3), voire plus, sont utilisés, il est préférable pour que les mélange soit le plus homogène possible que pour deux arbres adjacents au moins voire pour tous les arbres adjacents, la distance entre l'axe d'une tige et l'axe de l'arbre auquel elle est relié soit supérieure ou égale à 9/20 de la distance entre les axes de ces deux arbres adjacents. Cette distance peut être supérieure ou égale à la moitié de la distance D entre les axes de ces deux arbres, voire être supérieure à la moitié de la distance D entre les axes de ces deux arbres.

Dans le cas où trois arbres (n = 3), voire plus, sont utilisés, il est préférable pour que le mélange soit le plus homogène possible que
- d'une part deux arbres adjacents soient entrainés en contre-rotation l'un par rapport à l'autre avec, en suivant le sens du flux et en considérant, vu de dessus, qu'un de ces deux arbres adjacents est à gauche et que l'autre est à droite, l'arbre de gauche est entraîné dans le sens antihoraire et l'arbre de droite est entraîné dans le sens horaire et
- d'autre part pour chaque autre arbre voisin d'un de ces deux arbres adjacents (autre arbre dont la trajectoire de la (ou des) tige(s) coupe(nt) une trajectoire d'un tige d'un des deux arbres adjacents) cet autre arbre soit entraîné dans le même sens de rotation que l'arbre adjacent dont une tige au moins coupe la trajectoire de sa (ou ses) propre(s) tige(s).

Dans le cas où trois arbres (n = 3), voire plus, sont utilisés, il est préférable pour que le mélange soit le plus homogène possible selon la direction du flux que tous les arbres soient situés sur une droite P perpendiculaire à l'axe central A du flux F à mélanger et qu'ils soient tous entrainés en rotation à la même vitesse pendant le mélange avec un déphasage initial de 180°/x (soit 180°) par rapport à l'arbre adjacent s'il n'y a qu'un arbre adjacent ou par rapport aux deux arbres adjacents s'il y en a deux.

Dans le cas où deux arbres adjacents comportent chacun une seule tige, alors ces deux arbres sont entrainés en rotation à la même vitesse pendant le mélange avec un déphasage initial nul l'un par rapport à l'autre.

Dans le cas où une agitation très performante est nécessaire, il est possible de disposer deux rangées (droite P), voire plus, d'arbres pour obtenir un effet multiplicatif d'étirement des éléments du flux.

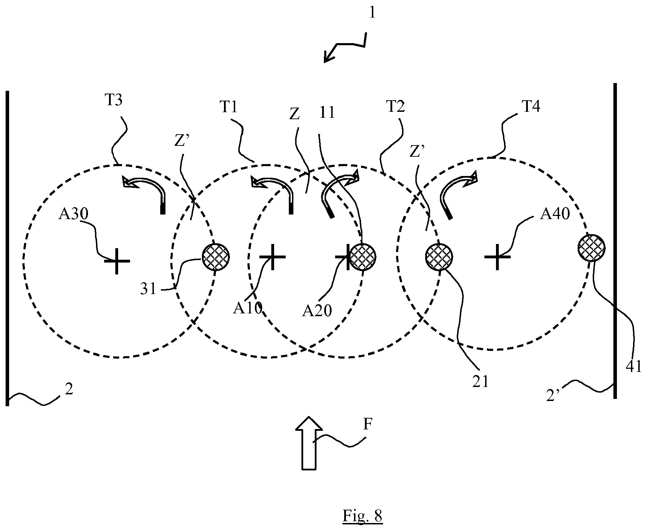

La figure 8 illustre une seconde variante de réalisation de l'invention pour laquelle quatre arbres 10, 20, 30, 40 (non visibles sur cette figures, seuls les axes respectivement A10, A20, A30 et A40 de ces arbres sont illustrés) adjacents sont entraînés en rotation et chacun de ces arbres est relié à une seule tige 11, 21, 31, 41, deux arbres adjacents 10, 20 étant entrainés en contre-rotation l'un par rapport à l'autre .

Dans cette variante, les éléments communs avec la variante précédente sont référencés de la même manière.

T1, T2, T3 et T4 illustrent en pointillés les trajectoires des axes des tiges respectivement des arbres 10, 20, 30 et 40.

Les deux arbres adjacents 10, 20 entrainés en contre-rotation l'un par rapport à l'autre sont disposés ici symétriquement par rapport à l'axe central A dudit flux F, à égale distance de cet axe.

Comme visible aussi en figure 8 ces deux arbres centraux 10, 20, sont entrainés en contre-rotation l'un par rapport à l'autre pour augmenter la vitesse du flux dans une zone Z de recouvrement des trajectoires T1 et T2 qui est située entre ces deux arbres.

La figure 8 illustre qu'en suivant le sens du flux (ici du bas vers le haut de la feuille) et qu'en considérant que ce flux est vu de dessus, un arbre, l'arbre 10, est situé à gauche et que l'autre arbre, l'arbre 20 est situé à droite, alors l'arbre 10 de gauche est entraîné en rotation dans le sens antihoraire par rapport à son axe A10 et l'arbre 20 de droite est entraîné dans le sens horaire par rapport à son axe A20.

L'arbre 30, qui est situé du même côté latéral du dispositif que l'arbre 10 est entraîné en rotation dans le même sens que l'arbre 10 et l'arbre 40, qui est situé du même côté latéral du dispositif que l'arbre 20 est entraîné en rotation dans le même sens que l'arbre 20.

Il a été testé que lorsque les quatre arbres sont entraînés en rotation à la même vitesse, un flux homogène est obtenu en aval de l'agitateur 1.

Sur cette figure les trajectoires latérales T3 et T4 sont de même diamètre que les trajectoires centrales 10, 20 mais elles peuvent être plus petites ou plus grandes.

Dans cette configuration illustrée, il existe en outre deux zones Z' de recouvrement de trajectoires à agitation contraire : à l'intersection d'une part de la trajectoire T3 avec la trajectoire T1 et d'autre part de la trajectoire T2 avec la trajectoire T4. Dans chacune de ces deux zones, comme les deux arbres adjacents (respectivement 30/10 et 20/40) sont entrainés dans le même sens de rotation l'un et l'autre, cela n'a pas pour effet d'augmenter la vitesse du flux dans ces zones Z' de recouvrement à agitation contraire.

La figure 9 montre une disposition selon l'invention, les axes de rotation des agitateurs étant alignés dans une direction perpendiculaire à l'écoulement, une source continue d'hétérogénéité de colorant ayant été introduite au point 90. On constate que le colorant après passage dans ce dispositif est réparti uniformément dans toute la largeur de l'écoulement. On a donc un mélange très homogène. La même efficacité peut être constatée quelle que soit la position de la source de colorant en amont des agitateur.

La figure 10 montre une disposition selon l'art antérieur, selon laquelle deux tiges agitatrices ont leurs axes alignés parallèlement au sens de l'écoulement. On constate qu'une source de colorant placée en position 100 n'est pas répartie de façon homogène après passage par la zone de mélange. Le mélange obtenu est bien moins homogène que dans le cas de la figure 9.

Le tableau 1 ci-dessous donne les taux d'étirement moyens vertical et horizontal selon différentes configurations d'agitation. Le cas 1 (référence) est celui de la figure 5 y compris la description qui s'y rapporte, les tiges ayant un diamètre de 40 mm sur toute leur hauteur. Le cas 4 correspond au dispositif représenté en figure 6 qui exerce une composante verticale notable. L'effet de mélange est bien tridimensionnel puisque le rapport des étirements horizontal sur vertical est de 8, comparé à un rapport de 71 à 156 pour les exemples selon l'invention. Surtout, les exemples selon l'invention procurent des taux d'étirement dans le plan horizontal au moins 8 fois supérieurs à ce qu'ils sont dans le cas n°4. Par ailleurs, le taux d'étirement tridimensionnel dans le cas n°4 est la racine carrée de 26² + 3,3², soit 26,2. Cela reste au moins 8 fois inférieur au taux d'étirement des exemples selon l'invention.

**Tableau 1**

| **Cas** | **Taux d'étirement horizontal** | **Taux d'étirement vertical** | **rapport taux d'étirement horizontal sur vertical** |
|---|---|---|---|
| Cas 1 - référence | 219 | 1,4 | 156 |
| Cas 2 - idem cas 1, mais diamètre des tiges = 20 mm | 235 | 2,0 | 117 |
| Cas 3 - idem cas 1, mais diamètre des tiges = 80 mm | 247 | 3,5 | 71 |
| Cas 4 - Vis (cf figure 6) | 26 | 3,3 | 8 |

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. - Procédé de fabrication d'un verre comprenant la réalisation d'un flux (F) de verre liquide s'écoulant selon un axe central (A) et le mélange de ce flux, **caractérisé en ce que** ledit mélange est réalisé en entraînant en rotation n arbres (10, 20), n nombre entier égal ou supérieur à deux, présentant chacun un axe positionné avec un angle compris entre 0° et 30° par rapport à une verticale à la direction de l'axe central (A) dudit flux (F), deux arbres (10, 20) adjacents étant séparés d'une distance (D) avec leurs axes parallèles et avec chacun de ces deux arbres (10, 20) adjacents qui est relié à au moins une tige (11, 12 ; 21, 22) qui est située au moins en partie dans ledit flux (F) et chacune de ces tiges (11, 12 ; 21, 22) présentant un axe parallèle à l'axe de l'arbre auquel elle est reliée,
**en ce que** pour lesdits deux arbres adjacents au moins, la distance (d₁₁, d₁₂ ; d₂₁, d₂₂) entre l'axe d'une tige et l'axe de l'arbre auquel elle est reliée est supérieure ou égale à 9/20 de la distance (D) entre les axes de ces deux arbres, et de préférence est supérieure ou égale à la moitié de la distance (D) entre les axes de ces deux arbres, afin de former une zone (Z) de recouvrement située entre ces deux arbres,
**en ce que** lesdits deux arbres adjacents sont entrainés en contre-rotation l'un par rapport à l'autre avec, en suivant le sens du flux et en considérant, vu de dessus, qu'un de ces deux arbres adjacents est à gauche et que l'autre est à droite, l'arbre de gauche est entraîné dans le sens antihoraire et l'arbre de droite est entraîné dans le sens horaire,
**et en ce que** le mélange du flux est réalisé dans des plans horizontaux, le taux d'étirement moyen dans le plan horizontal étant au moins 10 fois supérieur au taux moyen d'étirement vertical.

2. - Procédé selon la revendication précédente, **caractérisé en ce que** le taux d'étirement moyen dans le plan horizontal étant au moins 30 fois et de manière préférée au moins 50 fois supérieur au taux moyen d'étirement vertical.

3. - Procédé selon la revendication précédente, **caractérisé en ce que** le mélange du flux est réalisé uniquement au sein de plans horizontaux qui ne se mélangent pas entre eux.

4. - Procédé selon l'une quelconque des revendications précédentes, **caractérisé en ce que,** pour lesdits deux arbres (10, 20) adjacents, un de ces arbres (10) est relié à au moins une tige (11, 12) qui est située au moins en partie dans ledit flux (F) et l'autre arbre (20) est relié à au moins deux tiges (21, 22) qui sont situées chacune au moins en partie dans ledit flux (F).

5. - Procédé selon l'une quelconque des revendications 1 à 3, **caractérisé en ce que** quatre arbres (10, 20, 30, 40) adjacents sont entraînés en rotation et chacun de ces arbres (10, 20, 30, 40) est relié à une seule tige (11, 21, 31, 41), deux arbres adjacents (10, 20) étant entrainés en contre-rotation l'un par rapport à l'autre avec, en suivant le sens du flux et en considérant, vu de dessus, qu'un de ces deux arbres adjacents est à gauche et que l'autre est à droite, l'arbre de gauche est entraîné dans le sens antihoraire et l'arbre de droite est entraîné dans le sens horaire.

6. - Procédé selon l'une quelconque des revendications précédentes, **caractérisé en ce que** les axes desdits deux arbres (10, 20) adjacents sont situés dans un plan (P) qui est perpendiculaire à la direction de l'axe central (A) du flux (F) et de préférence sont disposés symétriquement par rapport à l'axe central dudit flux.

7. - Procédé selon la revendication précédente, **caractérisé en ce que** lesdits deux arbres (10, 20) adjacents sont entrainés en rotation à la même vitesse pendant le mélange avec un déphasage qui est
- soit de 0° avec deux arbres comportant chacun une seule tige,
- soit de 180°/x par rapport à l'arbre adjacent, x étant le nombre de tiges de l'arbre auquel est relié le plus grand nombre de tiges et x ≥ 2.

8. - Procédé selon l'une quelconque des revendications précédentes, **caractérisé en ce que** la vitesse de rotation des arbres (10, 20) est comprise entre 1 et 20 tours par minute en incluant ces valeurs pour une vitesse de flux (F) en amont du mélange comprise entre 0,1 et 5,0 mm/s en incluant ces valeurs.

9. - Procédé selon l'une quelconque des revendications précédentes, **caractérisé en ce que** lesdits deux arbres (10, 20) adjacents entrainés en contre-rotation l'un par rapport à l'autre sont disposés à égale distance, D/2, de l'axe longitudinal central (A) du flux (F).

10. - Procédé selon l'une quelconque des revendications précédentes, **caractérisé en ce que** ledit flux (F) présente un nombre d'étirement nb au moins égal à 20 ce nombre d'étirement nb étant = L / (UT), avec :
- L qui est longueur selon l'axe (A) le long de laquelle le mélange est effectué, en mm,
- U qui est la vitesse moyenne du fluide le long de cette longueur, en mm/s, et
- T qui est la période de rotation desdits arbres (10, 20) et qui vaut 60 / V où V est la vitesse de rotation desdits arbres en tours / minute.

11. - Procédé selon l'une quelconque des revendications précédentes, **caractérisé en ce que** la distance entre les tiges (11, 12 ; 21, 22) et l'arbre (10, 20) auquel sont reliées ces tiges est identique pendant le mélange.

12. - Procédé selon l'une quelconque des revendications précédentes, **caractérisé en ce qu'**au moins un arbre (10, 20) et de préférence tous les arbres, plonge(nt) dans ledit flux (F), cet arbre ou ces arbres qui plonge(nt) dans ledit flux présente(nt) de préférence dans leur partie qui plonge dans ledit flux une forme asymétrique par rapport à l'axe de l'arbre.

13. - Dispositif de fabrication d'un verre, notamment pour la mise en oeuvre du procédé selon l'une quelconque des revendications précédentes, comprenant un four générant un flux (F) de verre liquide et un agitateur (1) pour mélanger ce flux, **caractérisé en ce qu'**il comporte n arbres (10, 20) entraînés en rotation, n nombre entier égal ou supérieur à deux, présentant chacun un axe positionné avec un angle compris entre 0° et 30° par rapport à une verticale à la direction de l'axe central (A) dudit flux (F), deux arbres (10, 20) adjacents étant séparés d'une distance (D) avec leurs axes parallèles et avec chacun de ces deux arbres (10, 20) adjacents qui est relié à au moins une tige (11, 12 ; 21, 22) qui est située au moins en partie dans ledit flux (F) et chacune de ces tiges (11, 12, 21, 22) présentant un axe parallèle à l'axe de l'arbre auquel elle est reliée,
**en ce que** pour lesdits deux arbres adjacents au moins, la distance (d₁₁, d₁₂ ; d₂₁, d₂₂) entre l'axe d'une tige et l'axe de l'arbre auquel elle est relié est supérieure ou égale à 9/20 de la distance (D) entre les axes de ces deux arbres, et de préférence est supérieure ou égale à la moitié de la distance (D) entre les axes de ces deux arbres,
**en ce que** lesdits deux arbres adjacents sont entrainés en contre-rotation l'un par rapport à l'autre avec, en suivant le sens du flux et en considérant, vu de dessus, qu'un de ces deux arbres adjacents est à gauche et que l'autre est à droite, l'arbre de gauche est entraîné dans le sens antihoraire et l'arbre de droite est entraîné dans le sens horaire,
**et en ce que** le mélange du flux est réalisé dans des plans horizontaux, le taux d'étirement moyen dans le plan horizontal étant au moins 10 fois supérieur au taux moyen d'étirement vertical.

14. - Dispositif selon la revendication précédente, **caractérisé en ce que** le taux d'étirement moyen dans le plan horizontal étant au moins 30 fois et de manière préférée au moins 50 fois supérieur au taux moyen d'étirement vertical.

15. - Dispositif selon la revendication précédente, **caractérisé en ce que** le mélange du flux est réalisé au sein de plans horizontaux qui ne se mélangent pas entre eux.

16. - Dispositif selon l'une quelconque des revendications de dispositif précédentes, **caractérisé en ce que,** pour lesdits deux arbres (10, 20) adjacents, un de ces arbres (10) est relié à au moins une tige (11, 12) qui est située au moins en partie dans ledit flux (F) et l'autre arbre (20) est relié à au moins deux tiges (21, 22) qui sont situées chacune au moins en partie dans ledit flux (F).

17. - Dispositif selon l'une quelconque des revendications 13 à 15, **caractérisé en ce que,** quatre arbres (10, 20, 30, 40) adjacents sont entraînés en rotation et chacun de ces arbres (10, 20, 30, 40) est relié à une seule tige (11, 21, 31, 41), deux arbres adjacents (10, 20) étant entrainés en contre-rotation l'un par rapport à l'autre avec, en suivant le sens du flux et en considérant, vu de dessus, qu'un de ces deux arbres adjacents est à gauche et que l'autre est à droite, l'arbre de gauche est entraîné dans le sens antihoraire et l'arbre de droite est entraîné dans le sens horaire.

18. - Dispositif selon l'une quelconque des revendications de dispositif précédentes, **caractérisé en ce qu'**au moins une tige (11, 12 ; 21, 22), et de préférence chaque tige, présente une surface lisse.

19. - Dispositif selon l'une quelconque des revendications de dispositif précédentes, **caractérisé en ce qu'**au moins une tige (11, 12 ; 21, 22), et de préférence chaque tige, présente une section circulaire qui est de préférence identique tout le long de la tige, avec un diamètre de préférence compris entre 20 et 150 mm, voire compris entre 40 et 100 mm.

## Patentansprüche

1. Verfahren zum Herstellen eines Glases, umfassend das Erzeugen eines Stroms (F) aus flüssigem Glas, der entlang einer Mittelachse (A) fließt, und das Mischen dieses Stroms, **dadurch gekennzeichnet, dass** das Mischen bei Indrehungversetzen von n Wellen (10, 20) erzeugt wird, wobei n eine ganze Zahl gleich oder größer als zwei ist, die jeweils eine Achse aufweisen, die mit einem Winkel zwischen 0° und 30° relativ zu einer Vertikalen in Richtung der Mittelachse (A) des Stroms (F) positioniert ist, zwei angrenzende Wellen (10, 20) durch einen Abstand (D) voneinander getrennt sind, wobei ihre Achsen parallel sind und wobei jede dieser zwei angrenzenden Wellen (10, 20) mit mindestens einer Stange (11, 12; 21, 22) verbunden ist, die sich mindestens teilweise in dem Strom (F) befindet, und jede dieser Stangen (11, 12; 21, 22) eine Achse parallel zu der Achse der Welle vorweist, mit der sie verbunden ist,
**dass** für die mindestens zwei angrenzenden Wellen der Abstand (d₁₁, d₁₂; d₂₁, d₂₂) zwischen der Achse einer Stange und der Achse der Welle, mit der sie verbunden ist, größer als oder gleich 9/20 des Abstands (D) zwischen den Achsen dieser zwei Wellen ist und vorzugsweise größer als oder gleich der Hälfte des Abstands (D) zwischen den Achsen dieser zwei Wellen ist, um eine zwischen diesen zwei Wellen befindliche Bedeckungszone (Z) auszubilden,
**dass** die zwei angrenzenden Wellen zueinander in Gegendrehung versetzt werden, wobei bei Folgen der Richtung des Stroms und Berücksichtigen, dass von oben gesehen eine dieser zwei angrenzenden Wellen sich links und die andere rechts befindet, die linke Welle gegen den Uhrzeigersinn angetrieben und die rechte Welle im Uhrzeigersinn angetrieben wird,
und **dass** das Mischen des Stroms in horizontalen Ebenen erfolgt, wobei die durchschnittliche Streckrate in der horizontalen Ebene mindestens 10-mal größer als die durchschnittliche vertikale Streckrate ist.

2. Verfahren nach dem vorstehenden Anspruch,
**dadurch gekennzeichnet, dass** die durchschnittliche Streckrate in der horizontalen Ebene mindestens 30-mal und vorzugsweise mindestens 50-mal größer als die durchschnittliche vertikale Streckrate ist.

3. Verfahren nach dem vorstehenden Anspruch,
**dadurch gekennzeichnet, dass** das Mischen des Stroms nur innerhalb horizontaler Ebenen erfolgt, die sich nicht miteinander mischen.

4. Verfahren nach einem der vorstehenden Ansprüche,
**dadurch gekennzeichnet, dass** für die zwei angrenzenden Wellen (10, 20) eine dieser Wellen (10) mit mindestens einer Stange (11, 12) verbunden wird, die sich mindestens teilweise in dem Strom (F) befindet, und die andere Welle (20) mit mindestens zwei Stangen (21, 22) verbunden ist, die sich jeweils mindestens teilweise in dem Strom (F) befinden.

5. Verfahren nach einem der Ansprüche 1 bis 3,
**dadurch gekennzeichnet, dass** vier angrenzende Wellen (10, 20, 30, 40) in Drehung versetzt werden und jede dieser Wellen (10, 20, 30, 40) mit einer einzigen Stange (11, 21, 31, 41) verbunden ist, wobei zwei angrenzende Wellen (10, 20) in Gegendrehung zueinander versetzt werden, wobei bei Folgen der Richtung des Stroms und Berücksichtigen, dass von oben gesehen eine dieser zwei angrenzenden Wellen sich links und die andere rechts befindet, die linke Welle gegen den Uhrzeigersinn angetrieben und die rechte Welle im Uhrzeigersinn angetrieben wird.

6. Verfahren nach einem der vorstehenden Ansprüche,
**dadurch gekennzeichnet, dass** die Achsen der zwei angrenzenden Wellen (10, 20) in einer Ebene (P) gelegen sind, die senkrecht zu der Richtung der Mittelachse (A) des Stroms (F) ist, und vorzugsweise symmetrisch relativ zu der Mittelachse dieses Stroms angeordnet sind.

7. Verfahren nach dem vorstehenden Anspruch,
**dadurch gekennzeichnet, dass** die zwei angrenzenden Wellen (10, 20) während des Mischens mit der gleichen Geschwindigkeit in Drehung versetzt werden,
wobei eine Phasenverschiebung vorliegt, die
- entweder 0° mit zwei Wellen, die jeweils eine einzige Stange aufweisen,
- oder 180°/x relativ zu der angrenzenden Welle beträgt, wobei x die Anzahl der Stangen der Welle ist, mit der die größte Anzahl von Stangen verbunden ist, und x ≥ 2.

8. Verfahren nach einem der vorstehenden Ansprüche,
**dadurch gekennzeichnet, dass** die Drehgeschwindigkeit der Wellen (10, 20) zwischen 1 und 20 Umdrehungen pro Minute beträgt, einschließlich dieser Werte für eine Stromgeschwindigkeit (F) stromaufwärtig der Mischung einschließlich dieser Werte zwischen 0,1 und 5,0 mm/s.

9. Verfahren nach einem der vorstehenden Ansprüche,
**dadurch gekennzeichnet, dass** die zwei angrenzenden Wellen (10, 20), die zueinander in Gegendrehung versetzt werden, in dem gleichen Abstand D/2 von der Mittellängsachse (A) des Stroms (F) angeordnet sind.

10. Verfahren nach einem der vorstehenden Ansprüche,
**dadurch gekennzeichnet, dass** der Strom (F) eine Streckungszahl nb von mindestens gleich 20 vorweist, wobei diese Streckungszahl nb = L / (UT) ist, wobei:
- L die Länge entlang der Achse (A), entlang der das Mischen durchgeführt wird, in mm, ist,
- U die durchschnittliche Geschwindigkeit des Fluids entlang dieser Länge, in mm/s, ist und
- T die Drehperiode der Wellen (10, 20) ist und 60/V beträgt, wobei V die Drehgeschwindigkeit der Wellen in Umdrehungen/Minute ist.

11. Verfahren nach einem der vorstehenden Ansprüche,
**dadurch gekennzeichnet, dass** der Abstand zwischen den Stangen (11, 12; 21, 22) und der Welle (10, 20), mit der diese Stangen verbunden sind, während des Mischens identisch ist.

12. Verfahren nach einem der vorstehenden Ansprüche,
**dadurch gekennzeichnet, dass** mindestens eine Welle (10, 20) und vorzugsweise sämtliche der Wellen in den Strom (F) eintaucht/eintauchen, wobei diese Welle oder diese Wellen, die in den Strom (F) eintaucht/eintauchen, vorzugsweise in ihrem Teil, der in den Strom eintaucht, eine asymmetrische Form relativ zu der Achse der Welle vorweisen.

13. Vorrichtung zum Herstellen eines Glases, insbesondere für das Durchführen des Verfahrens nach einem der vorstehenden Ansprüche, umfassend einen Ofen, der einen Strom (F) aus flüssigem Glas erzeugt, und einen Rührer zum Mischen dieses Stroms, **dadurch gekennzeichnet, dass** sie n in Drehung versetzte Wellen (10, 20) aufweist, wobei n eine ganze Zahl gleich oder größer als zwei ist, wobei jede Achse in einem Winkel zwischen 0° und 30° relativ zu einer Vertikalen in Richtung der Mittelachse (A) des Stroms (F) positioniert ist, zwei angrenzende Wellen (10, 20) durch einen Abstand (D) voneinander getrennt sind, wobei ihre Achsen parallel sind und wobei jede dieser zwei angrenzenden Wellen (10, 20) mit mindestens einer Stange (11, 12; 21, 22) verbunden ist, die sich mindestens teilweise in dem Strom (F) befindet, und jede dieser Stangen (11, 12, 21, 22) eine Achse parallel zu der Achse der Welle vorweisen, mit der sie verbunden ist,
**dass** für die mindestens zwei angrenzenden Wellen der Abstand (d₁₁, d₁₂; d₂₁, d₂₂) zwischen der Achse einer Stange und der Achse der Welle, mit der sie verbunden ist, größer als oder gleich 9/20 des Abstands (D) zwischen den Achsen dieser zwei Wellen ist und vorzugsweise größer als oder gleich der Hälfte des Abstands (D) zwischen den Achsen dieser zwei Wellen ist,
**dass** die zwei angrenzenden Wellen zueinander in Gegendrehung versetzt werden, wobei bei Folgen der Richtung des Stroms und Berücksichtigen, dass von oben gesehen eine dieser zwei angrenzenden Wellen sich links und die andere rechts befindet, die linke Welle gegen den Uhrzeigersinn angetrieben und die rechte Welle im Uhrzeigersinn angetrieben wird,
und **dass** das Mischen des Stroms in horizontalen Ebenen erfolgt, wobei die durchschnittliche Streckrate in der horizontalen Ebene mindestens 10-mal größer als die durchschnittliche vertikale Streckrate ist.

14. Vorrichtung nach dem vorstehenden Anspruch,
**dadurch gekennzeichnet, dass** die durchschnittliche Streckrate in der horizontalen Ebene mindestens 30-mal und vorzugsweise mindestens 50-mal größer als die durchschnittliche vertikale Streckrate ist.

15. Vorrichtung nach dem vorstehenden Anspruch,
**dadurch gekennzeichnet, dass** das Mischen des Stroms innerhalb horizontaler Ebenen erfolgt, die sich nicht miteinander mischen.

16. Vorrichtung nach einem der vorstehenden Vorrichtungsansprüche, **dadurch gekennzeichnet, dass** für die zwei angrenzenden Wellen (10, 20) eine dieser Wellen (10) mit mindestens einer Stange (11, 12) verbunden wird, die sich mindestens teilweise in dem Strom (F) befindet, und die andere Welle (20) mit mindestens zwei Stangen (21, 22) verbunden ist, die sich jeweils mindestens teilweise in dem Strom (F) befinden.

17. Vorrichtung nach einem der Ansprüche 13 bis 15,
**dadurch gekennzeichnet, dass** vier angrenzende Wellen (10, 20, 30, 40) in Drehung versetzt werden und jede dieser Wellen (10, 20, 30, 40) mit einer einzigen Stange (11, 21, 31, 41) verbunden ist, wobei zwei angrenzende Wellen (10, 20) in Gegendrehung zueinander versetzt werden, wobei bei Folgen der Richtung des Stroms und Berücksichtigen, dass von oben gesehen eine dieser zwei angrenzenden Wellen sich links und die andere rechts befindet, die linke Welle gegen den Uhrzeigersinn angetrieben und die rechte Welle im Uhrzeigersinn angetrieben wird.

18. Vorrichtung nach einem der vorstehenden Vorrichtungsansprüche, **dadurch gekennzeichnet, dass** mindestens ein Stange (11, 12; 21, 22) und vorzugsweise jede Stange eine glatte Oberfläche vorweist.

19. Vorrichtung nach einem der vorstehenden Vorrichtungsansprüche, **dadurch gekennzeichnet, dass** mindestens eine Stange (11, 12; 21, 22) und vorzugsweise jede Stange einen kreisförmigen Abschnitt vorweist, der vorzugsweise entlang der gesamten Länge der Stange identisch ist, wobei ein Durchmesser vorzugsweise zwischen 20 und 150 mm oder sogar zwischen 40 und 100 mm beträgt.

## Claims

1. A method for producing a glass comprising the realization of a stream (F) of molten glass which flows along a central axis (A) and the mixing of said stream, **characterized in that** said mixing is realized by rotatingly driving n shafts (10, 20), n being a whole number equal to or in excess of two, each having an axis positioned at an angle of between 0º and 30º inclusive in relation to a vertical in the direction of the central axis (A) of said stream (F), two adjacent shafts (10, 20) being separated by a distance (D) with their axes parallel and with each of said two adjacent shafts (10, 20) connected to at least one rod (11, 12; 21, 22) which is situated at least in part in said stream (F) and each of said rods (11, 12; 21, 22) having an axis which is parallel to the axis of the shaft to which it is connected,
**in that** for said two adjacent axes at least, the distance (d₁₁, d₁₂; d₂₁, d₂₂,) between the axis of one rod and the axis of the shaft to which it is connected is in excess of or equal to 9/20 of the distance (D) between the axes of said two shafts, and in a preferred manner is in excess of or equal to half the distance (D) between the axes of the said two shafts, so as to form an overlap zone (Z) which is situated between said two shafts,
and **in that** said two adjacent shafts are rotatingly driven in opposite directions with respect to one another with, following the direction of the stream and considering, when seen from above, that one of said two adjacent shafts is on the left and the other is on the right, the left-hand shaft being driven in the anticlockwise direction and the right-hand shaft being driven in the clockwise direction,
and **in that**, the mixing of the stream is realized in horizontal planes, the mean draw rate in the horizontal plane being at least 10 times in excess of the mean vertical draw rate.

2. The method according to the preceding claim, characterized the mean draw rate in the horizontal plane is at least 30 times and in a manner preferred even more at least 50 times in excess of the mean vertical draw rate.

3. The method according to the preceding claim, **characterized in that** the mixing of the stream is realized solely within horizontal planes which do not mix together.

4. The method according to any one of the preceding claims, **characterized in that**, for said two adjacent shafts (10, 20), one of said shafts (10) is connected to at least one rod (11, 12) which is situated at least in part in said stream (F) and the other shaft (20) is connected at least to two rods (21, 22) which are each situated at least in part in said stream (F).

5. The method according to any one of claims 1 to 3, **characterized in that** four adjacent shafts (10, 20, 30, 40) are rotatingly driven and each of said shafts (10, 20, 30, 40) is connected to a single rod (11, 21, 31, 41), two adjacent shafts (10, 20) being rotatingly driven in opposite directions with respect to one another, following the direction of the stream and considering, when seen from above, that one of said two adjacent shafts is on the left and that the other one is on the right, the left-hand shaft is driven in the anticlockwise direction and the right-hand shaft is driven in the clockwise direction.

6. The method according to any one of the preceding claims, **characterized in that** the axes of said two adjacent shafts (10, 20) are situated in a plane (P) which is perpendicular to the direction of the central axis (A) of the stream (F) and in a preferred manner are arranged symmetrically with respect to the central axis of said stream.

7. The method according to the preceding claim, **characterized in that** said two adjacent shafts (10, 20) are rotatingly driven at the same speed during the mixing with a dephasing which is
- either 0º with two shafts which each include one single rod,
- or 180°/x in relation to the adjacent shaft, x being the number of rods of the shaft to which the largest number of rods is connected and x > 2.

8. The method according to any one of the preceding claims, **characterized in that** the speed of rotation of the shafts (10, 20) is between 1 and 20 revolutions per minute inclusive of said values for a speed of the stream (F) upstream of the mixing of between 0.1 and 5.0 mm/s inclusive of said values.

9. The method according to any one of the preceding claims, **characterized in that** said two adjacent shafts (10, 20) which are rotatingly driven in opposite directions with respect to one another are arranged at an equal distance, D/2, from the central longitudinal axis (A) of the stream (F).

10. The method according to any one of the preceding claims, **characterized in that** said stream (F) has a draw number nb which is at least equal to 20, said draw number nb being = L / (UT), with:
- L which is a length along the axis (A) along which the mixing is carried out, in mm,
- U which is the mean speed of the fluid along said length, in mm/s, and
- T which is the period of rotation of said shafts (10, 20) and which is worth 60 / V where V is the speed of rotation of said shafts in revolutions / minute.

11. The method according to any one of the preceding claims, **characterized in that** the distance between the rods (11, 12; 21, 22) and the shaft (10, 20) to which said rods are connected is identical during the mixing.

12. The method according to any one of the preceding claims, **characterized in that** at least one shaft (10, 20), and in a preferred manner all the shafts, dip(s) into said stream (F), said shaft or shafts which dips or dip into said stream, in a preferred manner, has or have in the part thereof which dips into said stream a form which is asymmetric in relation to the axis of the shaft.

13. A device for producing a glass, notably for implementing the method according to any one of the preceding claims, said device comprising a furnace which generates a stream (F) of molten glass and a stirrer (1) to mix said stream, **characterized in that** said device comprises n shafts (10, 20) which are rotatingly driven, n being a whole number equal to or in excess of two, each having an axis positioned at an angle of between 0º and 30º inclusive in relation to a vertical in the direction of the central axis (A) of said stream (F), two adjacent shafts (10, 20) being separated by a distance (D) with their axes parallel and with each of said two adjacent shafts (10, 20) connected to at least one rod (11, 12; 21, 22) which is situated at least in part in said stream (F) and each of said rods (11, 12; 21, 22) having an axis which is parallel to the axis of the shaft to which it is connected,
**in that** for said two adjacent axes at least, the distance (d₁₁, d₁₂; d₂₁, d₂₂,) between the axis of one rod and the axis of the shaft to which it is connected is in excess of or equal to 9/20 of the distance (D) between the axes of said two shafts, and in a preferred manner is in excess of or equal to half the distance (D) between the axes of the said two shafts,
and **in that** said two adjacent shafts are rotatingly driven in opposite directions with respect to one another with, following the direction of the stream and considering, when seen from above, that one of said two adjacent shafts is on the left and the other is on the right, the left-hand shaft being driven in the anticlockwise direction and the right-hand shaft being driven in the clockwise direction,
and **in that** the mixing of the stream is realized in horizontal planes, the mean draw rate in the horizontal plane being at least 10 times in excess of the mean vertical draw rate.

14. The device as claimed in the preceding claim, **characterized in that** the mixing of the stream is realized preferentially in horizontal planes, the mean draw rate in the horizontal plane being at least 30 times and in a manner preferred even more at least 50 times in excess of the mean vertical draw rate.

15. The device as claimed in the preceding claim, **characterized in that** the mixing of the stream is realized within horizontal planes which do not mix together.

16. The device as claimed in any one of the preceding device claims, **characterized in that** for said two adjacent shafts (10, 20), one of said shafts (10) is connected to at least one rod (11, 12) which is situated at least in part in said stream (F) and the other shaft (20) is connected at least to two rods (21, 22) which are each situated at least in part in said stream (F).

17. The device as claimed in any one of the preceding claims 13 to 15, **characterized in that** four adjacent shafts (10, 20, 30, 40) are rotatingly driven and each of said shafts (10, 20, 30, 40) is connected to a single rod (11, 21, 31, 41), two adjacent shafts (10, 20) being rotatingly driven in opposite directions with respect to one another, following the direction of the stream and considering, when seen from above, that one of said two adjacent shafts is on the left and that the other one is on the right, the left-hand shaft is driven in the anticlockwise direction and the right-hand shaft is driven in the clockwise direction.

18. The device as claimed in any one of the preceding device claims, **characterized in that** at least one rod (11, 12; 21, 22), and in a preferred manner each rod, has a smooth surface.

19. The device as claimed in any one of the preceding device claims, **characterized in that** at least one rod (11, 12; 21, 22), and in a preferred manner each rod, has a circular section which in a preferred manner is identical all along the rod, with a preferred diameter of between 20 and 150 mm inclusive, or even of between 40 and 100 mm inclusive.
